# EUROPÄISCHE PATENTSCHRIFT

(11) **EP 1 449 399 B1**
(45) Veröffentlichungstag und Bekanntmachung des Hinweises auf die Patenterteilung: **24.01.2007**
(21) Anmeldenummer: 01995533.5
(22) Anmeldetag: 27.11.2001
(51) Int. Cl.: H04Q 7/38

(54) **VERFAHREN ZUM ABFRAGEN DES EINVERSTÄNDNISSES ZUR POSITIONSDATENERFASSUNG EINES MOBILFUNKENDGERÄTES, UND ENTSPRECHENDES MOBILFUNKNETZ**
METHOD FOR POLLING CONCORDANCE WITH POSITIONAL DATA RECORDING OF A MOBILE RADIO TERMINAL AND CORRESPONDING MOBILE RADIO NETWORK
PROCEDE DE DEMANDE D'ACCORD POUR LA DETECTION DE DONNEES DE POSITION D'UN TERMINAL DE COMMUNICATION MOBILE ET RESEAU DE COMMUNICATION MOBILE CORRESPONDANT

(43) Veröffentlichungstag der Anmeldung: 25.08.2004
(73) Patentinhaber: SIEMENS AKTIENGESELLSCHAFT, 80333 München (DE)
(72) Erfinder: HOEHFELD, Markus, 82024 Taufkirchen (DE); HOLZHAUER, Thomas, 81369 München (DE); RUPRECHT, Mario, 15370 Petershagen (DE)
(86) Internationale Anmeldenummer: PCT/DE2001/004458
(87) Internationale Veröffentlichungsnummer: WO 2003/049478

(56) Entgegenhaltungen:
- WO-A-98/52379
- WO-A-99/27746
- WO-A-99/63780
- US-B1- 6 195 557
- "Digital cellular telecommunications system (Phase 2+)(GSM); Universal Mobile Telecommunications System (UMTS); Functional stage description of location services " 3GPP TS 23.271 VERSION 4.3.0 RELEASE 4, Oktober 2001 (2001-10), XP002205121 in der Anmeldung erwähnt

## Beschreibung

Die Erfindung betrifft Verfahren und Vorrichtungen zum Abfragen des Einverständnisses eines Mobilfunkendgerät-Nutzers mit der Übermittlung seiner Positionsdaten an einen Anfragenden (GMLC Controlled Privacy).

Dokument D1 (WO 98/52379) beschreibt die Bestimmung des geographischen Ortes einer Mobilstation in einem mobilen Kommunikationsnetz. Es wird dabei darauf abgezielt, dass die Integrität des Nutzers einer Mobilstation geschützt und das bekannt werden des Ortes einer Mobilstation gegen den Willen des Nutzers unterbunden wird. Für diesen Zweck wird eine Autorisationsprüfung in Verbindung mit einer Anfrage zur geographischen Ortsbestimmung einer Mobilstation durchgeführt. Der geographische Ort wird nur bestimmt, wenn eine Autorisation für die zu bestimmende Mobilstation vorhanden ist. Diese Autorisationskontrolle schließt das Überprüfen ein, dass ein Nutzer einer Mobilstation sein Einverständnis für die Ortsbestimmung seiner Mobilstation gegeben hat. Die Autorisationsüberprüfung beinhaltet auch, dass nur bestimmte Dritte über den geographischen Ort einer Mobilstation informiert werden.

Dokument D2 (WO 99/63780) beschreibt ein Verfahren in einem Telekommunikationssystem zum Administrieren von Orts-Diensten unter Verwendung von schwarzen und grauen Orts-Applikations-Listen und einem Positions-Gateway. Wenn sich eine Orts-Applikation in einen Orts-Dienst einschreibt, wird von einem Dienste-Provider der Orts-Applikation eine eindeutige Orts-Applikations-Identifizierungs-Nummer (LAIN) zugeordnet, die bei jeder Positionsanfrage enthalten ist. Die schwarze Liste wird zum Untersagen von Diensten an Orts-Applikationen, die in der Liste enthalten sind, benutzt, während das Orts-Applikations-Profil der Orts-Applikation in einem Positions-Gateway gewartet wird. Orts-Applikationen, die in der grauen Liste eingetragen sind, haben einen Zugang zu einem Dienst, jedoch wird dieser von einer Netzeinheit überwacht.

Aus 3GPP-TS 23.271 ist es bekannt, Positionsdaten eines Mobilfunkendgerät-Nutzers eines zellularen Mobilfunknetzes für ortsabhängige Dienste wie Informationen über die nächstliegende Tankstelle, etc. (= Location Services= LCS) zu benutzen. Jedoch möchte unter Umständen ein Mobilfunkendgerät-Nutzer vermeiden, dass jeder Dritte seine aktuelle Position vom Mobilfunknetz erfragen kann. Deshalb benötigt der Mobilfunkendgerät-Benutzer eine Funktion, welche für jeden potentiellen, seine Position vom Mobilfunknetz Anfragenden, festlegt, ob die Mitteilung der Positionsdaten des Mobilfunkendgerät-Nutzers an diesen Anfragenden allgemein erlaubt ist, grundsätzlich verboten ist oder nach Rückfrage beim Mobilfunkendgerät-Nutzer erlaubt sein kann. Diese Funktion wird als LCS-User Privacy (also LCS-Benutzer-Privatsphären-Funktion) bezeichnet.
Die gemäß 3GPP definierte LCS-User Privacy (3GPP Standard TS 23.271 und TS 29.002) benötigt relativ viel Speicher im Heimatregister des Mobilfunknetzes (HLR) und in der Vermittlungsstelle (MSC-SGSN) und verursacht eine hohe Last bei der Kopie von Bedingungen betreffend die Übermittlung von Positionsdaten eines Nutzers an einen Anfragenden vom HLR zur vom Nutzer aktuell benutzten Vermittlungsstelle (visited MSC/SGSN).
Gemäß 3GPP Standards TS 23.271 und TS 29.002 ist die LCS-User Privacy für jeden Subscriber in einem Home Location Register (HLR) in mehreren Privacy-Klassen gespeichert und wird vom HLR zum vom Benutzer besuchten MSC oder SGSN heruntergeladen worauf eine LCS-User Privacy Funktion überprüft, ob im Falle einer Anfrage nach der Position des Mobilfunkendgerätes (Mobile Terminating Location Request MT-LR) von einen GMLC, Positionsdaten an den Anfragenden übertragen werden sollen. Für Value Added Services sind LCS Privacy Classes vorgesehen, nämlich die Call-Session related class und die Call-Session unrelated class. In 3GPP kann der Benutzer für jede dieser zwei Klassen bis zu 40 LCS-Client-IDs spezifizieren und für jede Client-ID (Identitäten von potenziellen die Position des Nutzers Anfragenden) Angaben dahingehend festlegen, wie die vom Nutzer besuchte MSC/SGSN den LCS-User-Privacy-Check durchführen soll. Zum Beispiel ist es möglich, festzulegen, dass der Benutzer nur eine LCS-Notification (also Mitteilung dass jemand sein Position erfragt) bekommt oder dass der Nutzer eine LCS-Verification (also Rückfrage bei ihm vor Übermittlung seine Position an einen Anfragenden) bekommt und andere Möglichkeiten. Wenn LCS-Client-ID nicht in einer vom Benutzer vorgegebenen Liste gespeichert ist, wird ein Rückfallverfahren (Default behaviour) gemäß Vorgaben des Benutzers ausgeführt.

Aufgabe der vorliegenden Erfindung ist es, einem Nutzer eines Mobilfunknetzes möglichst einfach und effizient Vorgaben betreffend Anfragen seine Position zu ermöglichen. Die Aufgabe wird jeweils durch die Gegenstände der unabhängigen Ansprüche gelöst.

Indem erfindungsgemäß bei Eintreffen einer Anfrage eines Anfragenden bei einer Positionsdatenanfrageannahmestelle (GMLC) vor Weiterleitung der Anfrage an die aktuell vom Mobilfunkendgerät besuchte Vermittlungsstelle (MSC, SGSN) des Mobilfunknetzes, die Anfragedaten um eine Angabe ergänzt werden, welche zumindest angibt, ob ein Einverständnis des Mobilfunkendgerät-Nutzers zur Weitergabe der Mobilfunkendgerät-Position an diesen Anfragenden einzuholen ist, wird es ermöglicht, diese Positionsdatenanfragenannahmestelle GMLC des Mobilfunknetzes mit einer vom Nutzer änderbaren Datei auszustatten, welche für beliebige Anfragen angibt, ob ein Einverständnis vor einer Positionsdatenübermittlung einzuholen und fakultativ zu welcher Zeit und/oder für welche Positionen eine Positionsdatenübermittlung an diesen Anfragenden vom Nutzer erlaubt ist. Hiermit kann eine erhöhte Last durch Herunterladen von derartigen Angaben vom Home Location Register in eine Vermittlungsstelle MSC/SGSN erheblich verringert werden, weil lediglich für virtuelle Identitäten in Form einer begrenzten Zahl von Angaben vom HLR an eine MSC mitgeteilt werden muß, ob der Nutzer vor Übermittlung seiner Positionsdaten angefragt werden muß und was zu tun ist, wenn er hierauf nicht antwortet. Die Angaben in der Positionsdatenanfragenannahmestelle (GMLC) dahingehend, ob ein Nutzer vor Übermittlung seiner Positionsdaten zu fragen ist und was zu tun ist, wenn er nicht antwortet bzw. ob er nur zu informieren ist oder ohne Information und Rückfrage eine Positionsdatenermittlung an diesen Anfragenden möglich ist, können vom Nutzer bei einer erfindungsgemäßen Ausgestaltung einfach per Mobilfunk (Sprache oder SMS, etc.) oder WAP oder Internet etc. geändert werden und mit zusätzlichen Bedingungen (Attributen, wie zeitabhängig oder ortsabhängig) verknüpft werden, was bei einer bisher üblichen Speicherung im HLR nicht ermöglicht wurde.

Weitere Merkmale und Vorteile der Erfindung ergeben sich aus der nachfolgenden Beschreibung eines Ausführungsbeispieles anhand der Zeichnung.

Es zeigt:
- Fig. 1: eine Positionsdatenabfrage gemäß 3GPP R4 und
- Fig. 2: schematisch eine erfindungsgemäße Abwandlung dieser Positionsdatenabfrage.

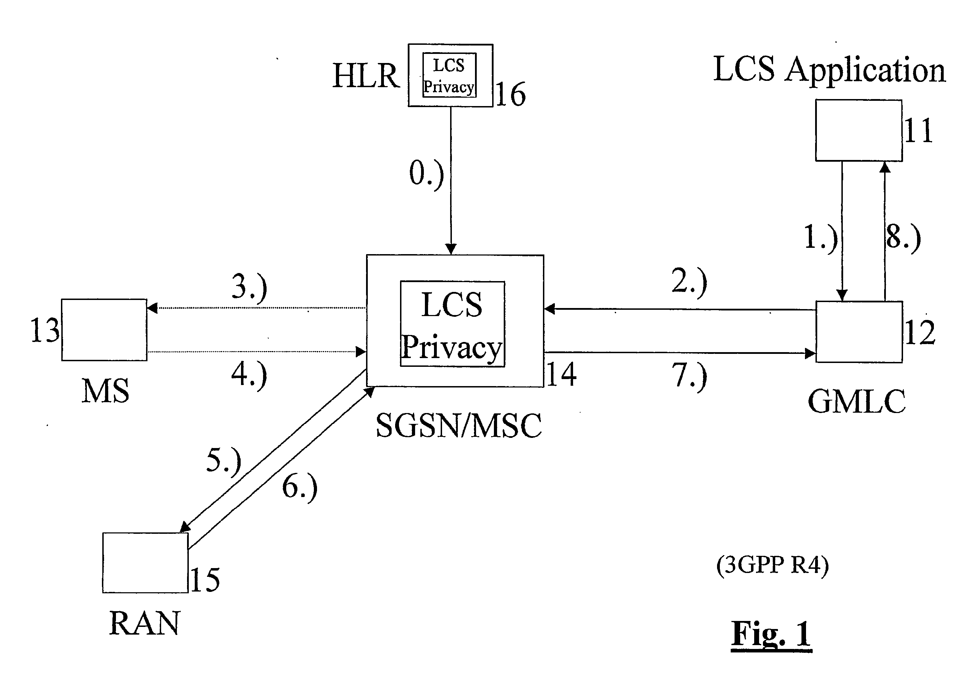

In Fig. 1 wird von einer Positionsdatenanwendung (LCS Application) 11 eine Anfrage 1 an eine Positionsdatenanfragenannahmestelle (GMLC) 12 gesandt, welche diese Positionsdatenanfrage im Schritt 2 an eine vom Nutzer des Mobilfunkendgerätes (MS) 13 aktuell besuchte Vermittlungsstelle (SGSN/MSC etc.) 14 weiterleitet. Die Vermittlungsstelle SGSN/MSC 14 hat (z.B. regelmäßig) in einem Schritt 0 von einem HLR heruntergeladene Angaben zu Mobilfunkendgerät-Nutzern gespeichert die aussagen, ob vor Übermittlung der Position des Mobilfunkendgerätes an den Anfragenden 11 beim Mobilfunkendgerät 13 zurück zu fragen ist. Falls eine derartige Rückfrage vorgeschrieben ist, fragt im Schritt 3 die Vermittlungsstelle 14 im Mobilfunkendgerät 13 nach, ob der Nutzer des Mobilfunkendgerätes 13 für die aktuelle Anfrage des Anfragenden 11 diesem die aktuelle Mobilfunkendgerät-Position mitteilen möchte. Hierauf kann eine Antwort 4 vom Mobilfunkendgerät an die Vermittlungsstelle 14 erfolgen oder unter Umständen keine Antwort erfolgen, wenn das Mobilfunkendgerät beispielsweise nicht benutzt wird, ausgeschaltet ist oder sich in einem Funkloch befindet. Wenn eine Übermittlung der Position des Mobilfunkendgerätes an den Anfragenden 11 grundsätzlich erlaubt ist oder wenn sie alternativ hierzu nur nach Einholen eines Einverständnisses 4 erlaubt ist und das Einverständnis vorliegt oder wenn alternativ hierzu vorgegeben ist, bei Nichteintreffen einer Ablehnung des Einverständnisses die Position zu übermitteln, kann eine Übermittlung der Position von der Vermittlungsstelle 14 an den Anfragenden 11 erfolgen. Die Vermittlungsstelle 14 fragt im Schritt 5 bei einem RAN eines 3G-Netzwerkes oder eine BSS eines 2G-Netzwerkes etc die Position des Mobilfunkendgerätes 13 ab (beispielsweise aufgrund der Zell-Identität der vom Mobilfunkendgerät 13 aktuell genutzten Mobilfunkzelle) und bekommt im Schritt 6 die aktuelle Mobilfunkendgeräteposition zurück. Falls die Übermittlung der Position an den Anfragenden 11 erfolgen soll, übermittelt die Übermittlungsstelle 14 die Position repräsentierenden Daten an die Positionsdatenanfragenannahmestelle GMLC 12 im Schritt 7, welche diese ohne weitere Bedingungen im Schritt 8 an den Anfragenden 11 (gegebenenfalls unter Angabe des Alters der Positionsdaten, soweit das Alter von der Positionsdatenermittlungsstelle RAN/BSS 15 ermittelt wurde) weiter.

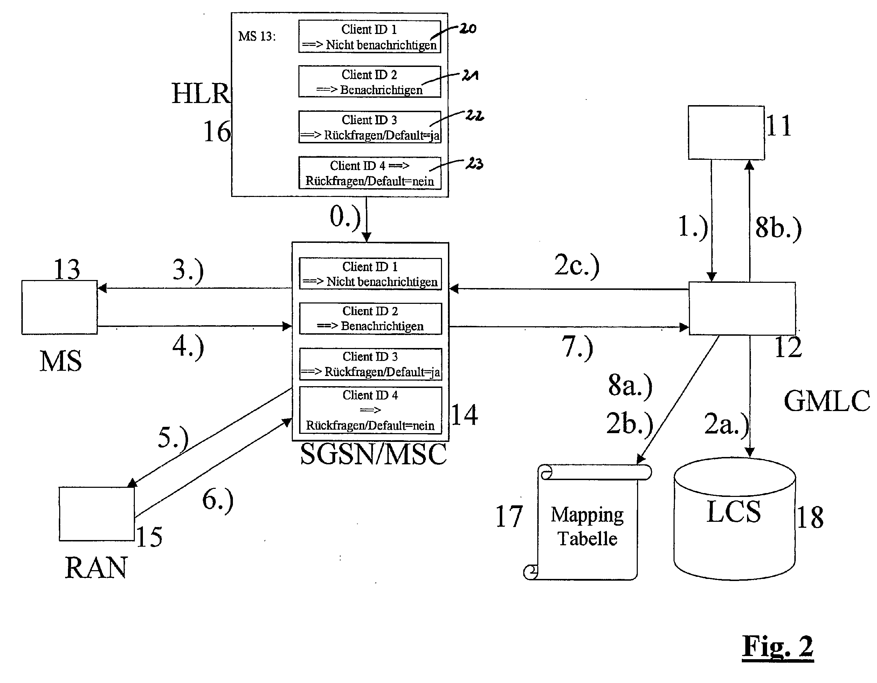

Figur 2 zeigt eine erfindungsgemäße Erfassung der Position und Weiterleitung an den Anfragenden unter vom Mobilfunkendgerät-Nutzer vorgegebenen Bedingungen:

Dabei kann ein Mobilfunknetz gemäß 3GPP R 4 Standard verwendet werden, ohne gegen den Standard zu verstoßen, so dass eine weitgehende Aufwärtskompatibilität möglich ist.

Wie auch bei der in Figur 1 dargestellten Lösung wird von einem Heimatregister des Mobilfunknetzes HLR 16 auf Anfrage oder regelmäßig im Schritt 0 für eine Vielzahl von Mobilfunkendgerät-Nutzern an (bei Anfragen) die vom Mobilfunkendgerät-Nutzer aktuell benutzte Vermittlungsstelle SGSN/MSC 14 oder (bei regelmäßiger Übertragung) an alle Vermittlungsstellen ein Satz von Angaben übertragen, welcher hier jedoch angibt, für welche der Vermittlungsstelle 14 in Anfragen betreffend der Position mitgeteilten (hier virtuell) Anfragenden - Identitätsdaten welche Anweisungen betreffend Rückfragen um Einverständnis bei der Mobilstation 13 von der Vermittlungsstelle 14 auszuführen sind. Erfindungsgemäß ist dies eine begrenzte Anzahl von Angaben (für eine begrenzte Anzahl von virtuellen Identitäten), im in Figur 2 vorliegenden Beispiel 4 Angaben für 4 (virtuelle) Identitäten. Dadurch, dass diese Angaben 20, 21, 22, 23 für eine Vielzahl von Nutzern von Mobilfunkendgeräten gleich sein können, weil sie nicht Entscheidungen der Nutzer zu bestimmten Anfragenden enthalten, sondern allgemeine Anweisungen für 4 verschiedene Fälle, kann die Netzlast zwischen HLR 16 und Vermittlungsstelle MSC/SGSN 14 erheblich verringert werden. Überdies ist die Zahl der Angaben hier sehr gering im Vergleich zur möglichen Anzahl von bis zu 80 Angaben (für bis zu 80 verschiedene Anfragende) pro Mobilstation gemäß 3GPP Standard, was den Netzlastverkehr zwischen HLR und Vermittlungsstelle 14 weiter erheblich verringert.

Im vorliegenden Beispiel sind 5 verschiedene Fälle vorgesehen, wobei nur für 4 verschiedene Fälle eine Speicherung in der Vermittlungsstelle 14 erfolgen muß: Dies wird dadurch ermöglicht, dass die Positionsdatenanfragenannahmestelle GMLC 12 vor der Weiterleitung von Anfragen eines Anfragenden 11 an die Vermittlungsstelle 14 in den Anfragedaten der Anfrage an die Position, an welcher üblicherweise die Identität des Anfragenden 11 steht, eine virtuelle Identität 20, 21, 22 oder 23 gemäß in der Positionsdatenanfragenannahmestelle GMLC 12 gespeicherten oder für diese verfügbaren Tabellen 18 ersetzt, in welchen für jeden Nutzer einer Mobilstation 13 (bzw. für dessen MSISDN, IMSI, etc.) angegeben ist, wie für welchen Anfragenden 11 zu verfahren ist. Anstatt der Identität des Anfragenden 11 kommt somit bei der Vermittlungsstelle 14 nur eine virtuelle Identität 20 bis 23 an, für welche Handlungsanweisungen vom Heimatregister HLR 16 in die Vermittlungsstelle 14 geladen wurden oder werden und gemäß diesen Handlungsanweisungen in standardgemäßer Weise entweder bei der Mobilstation 13 um Einverständnis zur Übermittelung seiner Position an den Anfragenden 11 angefragt wird oder nicht und für eine Nichtantwort eine Default-Angabe vorgesehen ist.

Die Identität des Anfragenden wird in der Positionsanfragenannahmestelle GMLC 12 durch eine der 5 folgenden (virtuellen) Identitäten (die nur noch Handlungsanweisungen darstellen, aber nicht mehr die Identität des Anfragenden 11 repräsentieren) an die Vermittlungsstelle 14 übersandt:
Client-ID 1: (virtuelle Identität 1) Positionsdaten mitteilen ohne Benachrichtigung der Mobilstation 13 (was bedeutet, dass bei einer Anfrage dem Anfragenden 11 die Position der Mobilstation 13 ohne Benachrichtung der Mobilstation 13 übermittelt wird),
Client-ID 2 (virtuelle Identität 2): Benachrichtigen (was bedeutet, dass im Falle einer Anfrage des Anfragenden 11 diesem die Position der Mobilstation 13 übermittelt wird, die Mobilstation 13 jedoch hierüber informiert wird),
Client-ID 3 (virtuellen Identität 3): Entsprechend einer Handlungsanweisung, dass die Mobilstation 13 gefragt werden soll, ob dem Anfragenden 11 die Position der Mobilstation 13 übermittelt werden soll, wobei eine Übermittlung der Position an den Anfragenden 11 erfolgt, falls die Mobilstation entweder mit ja antwortet oder überhaupt nicht antwortet (weil sie ausgeschaltet ist, etc.).
Client-ID 4 (virtuelle Identität 4): Handlungsanweisung an die Vermittlungsstelle 14 dahingehend, dass vor einer Übermittlung der Position der Mobilstation 13 an den Anfragenden 11 dieser um Einverständnis gefragt wird und wobei eine Übermittlung der Position der Mobilstation 13 nur erfolgt, falls von der Mobilstation 13 eine Antwort 4 kommt und diese Antwort bejahend ist.

Für die fünfte Möglichkeit, nämlich dass eine Positionsdatenerfassung für die Mobilstation 13 grundsätzlich für den Anfragenden 11 nicht erlaubt ist, muss in dem Heimatregister 16 und in der Vermittlungsstelle 14 nichts gespeichert sein, weil in diesem Falle die Positionsdatenanfragenannahmestelle GMLC 12 ohne Rückfrage bei der Vermittlungsstelle 14 gegenüber dem Anfragenden 11 eine Ablehnung der Positionsdatenerfassung mitteilen kann.

Bei der Benachrichtigung der Mobilstation 13 und bei der Anforderung eines Einverständnisses zur Übermittlung der Positionsdaten bei der Mobilstation 13 im Schritt 3, wird dieser beispielsweise (standardgemäß) der Name von dem Anfragenden 11 mitgeteilt, so dass der Nutzer der Mobilstation 13 weiß von wem die Anfrage kommt.

Die Zuordnung der Angaben 20 bis 23 (=virtuelle Identitäten, welche nur Handlungsanweisungen referenzieren) ist somit dem HLR 16 (welches es der von der Mobilstation 13 besuchten Vermittlungsstelle 14 mitteilt), sowie der Positionsdatenanfragenannahmestelle GMLC 12 bekannt. Wenn eine Positionsdatenanfragenannahmestelle GMLC 12 eine Anfrage 1 eines Anfragenden 11 empfängt, werden die empfangenen Identitätsdaten (Client-ID) des Anfragenden 11 vor dem Weitersenden 2c durch virtuelle Identitätsdaten 20 oder 21 oder 22 oder 23 ersetzt, anhand einer Zuordnungstabelle (Mapping Table) 17, welche die von dem Nutzer der Mobilstation 13 eingestellte Zuordunungen von Identitätsdaten zu den virtuellen Identitäten 20 bis 23 enthält. Die Tabelle kann gegebenenfalls um erweiterte Attribute, wie zeitliche oder örtliche Einschränkungen oder Abhängigkeiten von erweiterten Angaben über oder von dem Anfragenden 11, ergänzt sein.

Obiges erfindungsgemäßes Verfahren ist ohne Kollision mit dem 3GPP-Standard einfach und effizient realisierbar.

Alternativ kann folgendes Verfahren angewendet werden:
Die Angaben 20 bis 23 (virtuelle Identitäten Client-ID 1 bis 4) sind wie auch oben im HLR 16 und in einer Positionsdatenanfragenannahmestelle GMLC 12 gespeichert. Bevor dieses alternative Verfahren (=Verfahren II) angewendet wird, wird von der Positionsdatenanfragenannahmestelle GMLC 12 überprüft, ob die Vermittlungsstelle MSC/SGSN 14 in der Lage ist, das Verfahren II anzuwenden. Dies kann insbesondere der Fall sein, wenn die Vermittlungsstelle MSC/SGSN 14 im gleichen Netzwerk wie die Positionsdatenanfragenannahmestelle GMLC 12 oder in einem vergleichbaren Netzwerk wie die Positionsdatenanfragenannahmestelle GMLC 12 angeordnet ist oder in einer speziellen Liste gespeichert ist. Falls dies der Fall ist, wird von der Positionsdatenanfragenannahmestelle GMLC 12 die in der Anfrage im Schritt 1 vom Anfragenden 11 mit übermittelte Identität (LCS Client-ID) des Anfragenden 11 im Schritt 2c in Figur 2 mit der Positionsanfrage an die Vermittlungsstelle SGSN/MSC 14 in einem _{"}Extension Container" (Erweiterungscontainer gemäß 3GPP-Standard TS 29.002) oder in einem Extension Container in der _{"}LCS Client external ID" oder in der _{"}LCS Client dialled by MS" etc übersandt. Die Vermittlungsstelle SGSN/MSC 14 führt die Prüfungen wie oben ausgeführt aus, prüft jedoch vor Übersendung der Benachrichtigung oder Einverständnisanfrage an die Mobilstation, ob die Positionsdatenanfrageannahmestelle GMLC 12 das Verfahren II unterstützt. Falls das Verfahren II von der Positionsdatenanfrageannahmestelle GMLC 12 unterstützt wird, ersetzt die Vermittlungsstelle SGSN/MSC 14 vor der Anfrage 3 bei der Mobilstation 13 hinsichtlich Einverständnis oder Mitteilung die Angabe 20/21/22/23 (virtuelle Identität) in den Anfragedaten mit der in Extension Container übermittelten wirklichen LCS-Client-ID des Anfragenden 11. Wo die wirkliche LCS-Client-ID des Anfragenden 11 zu finden ist, kann vorgesehen sein oder im Einzelfall mitgeteilt werden.

Der erfindungsgemäße Ablauf der ersten obigen Methode kann also folgendermaßen sein:
Im Schritt 0 wird auf Anfrage oder regelmäßig vom Heimatregister HLR 16 an die Vermittlungsstelle SGSN/MSC 14 für jede Mobilstation 13 eine Liste der Handlungsanweisungen 20 bis 23 für bestimmte Anfragen übermittelt, wobei in den Anweisungen 20 bis 23 die Anfrager-Identitäten Client ID1 bis Client ID4 nur virtuelle Identitäten zur Referenzierung der dazugehörigen Handlungsanweisungen sind.
Schritt 1: Übermittlung eines LCS Service Request von einem LCS-Kunden (Anfragen der 11) an eine Positionsdatenanfragenannahmestelle GMLC 12 und der Übermittlung von dazu benötigten und optionalen Daten (Client ID,IMSI/MSISDN, QoS)
Schritt 2a: Von der Positionsdatenanfragenannahmestelle GMLC 12 wird abgefragt, welche Angabe 20 bis 23 im Schritt 2c anstelle der Identität des Anfragenden 11 in der Anfrage 1 (Client ID) für den in der Anfrage 1 angegebenen Anfragenden (Client ID) und für das in der Anfrage 1 definierte Mobilfunkteilnehmeridentitätsmodul der Mobilstation 13 (IMSI/MSISDN) an die Vermittlungsstelle MSC/SGSN 14 übermittelt werden soll. Dabei kann vor der Anfrage 2C überprüft werden zu welchen Uhrzeiten oder nach der Antwort 7 in welchem Gebiet, für einen bestimmten Nutzer (mit IMSI/MSISDN etc. gemäß der Anfrage 1) und für einen speziellen Anfragenden 11 (gemäß Client ID in der Anfrage 1) der Nutzer der Mobilstation 13 eine Abfrage der Positionsdaten mit oder ohne Rückfrage 3 erlaubt hat und das Verfahren mit Schritten 2c bis 7 gegebenenfalls nur im positiven Falle weitergeführt wird und sonst im Schritt 8 eine Ablehnung der Positionsanfrage übertragen wird.
Schritt 2b: Die in Anfrage 1 übermittelte Identität (Client ID) des Anfragenden 11 wird zusammen mit einer, der Anfrage 2c zugeordneten, Transaktionsidentität (MAP Referenz) in einer Zuordnungstabelle (Mapping Table 17) gespeichert, um eine Antwort 7, welche die gleiche Transaktionsidentität, wie die Weiterleitung 2c enthält, dem Anfragenden 11 wieder zuordnen zu können.
Schritt 2c: Von der Positionsdatenfragenannahmestelle GMLC 12 wird eine Anfrage mit einer Angabe 20 oder 21 oder 22 oder 23 an eine Vermittlungsstelle 14, die von der Mobilstation 3 (gemäß HLR-Angabe etc.) gerade besucht wird übermittelt. Schritte 3 bis 7 folgen wie zu Figur 1 angegeben, wobei jedoch die Vermittlungsstelle SGSN/MSC 14 vom HLR16 für die in der Anfrage 1 spezifizierte (IMSI/MSISDN etc.) Mobilstation 13 nur die für eine Vielzahl von Mobilstationen gleichen Angaben 20 bis 23 mit zugeordneten Anweisungen ( Positionsdaten ohne Mitteilung übermitteln, Positionsdaten unter Mitteilung an die Mobilstation übermitteln, vor Positionsdatenübermittlung bei Mobilstation um Erlaubnis fragen und nur bei einem ja oder bei Ausbleiben einer Antwort übermitteln, vor Positionsdatenübermittlung bei der Mobilstation anfragen und nur bei Eintreffen eines ja übermitteln).
Schritt 8a: Im Unterschied zu obigen Verfahren ersetzt die Positionsdatenfragenannahmestelle GMLC 12 nach Erhalt einer Antwort 7 (umfassend Positionsdaten und eventuell das Alter der Erfassung und Transaktionsidentität) die erhaltene Transaktionsidentität anhand der Zuordnungstabelle 17 mit der Identität des Anfragenden 11 und frägt eventuell noch in der Vorgabenliste 18 betreffend Ortsvorgaben des Nutzers 13 nach und übermittelt in Schritt 8b die Positionsdaten (soweit dies zugelassen war) oder eine Ablehnung der Positionsdatenerfassung an dem Anfragenden 11.

Die vor Übermittlung der Positionsdaten an den Anfragenden 11 von der Positionsdatenfragenannahmestelle GMLC 12 bei einer LCS-Privacy-Datenbank 18 nachgefragten Ortsvorgaben für den (von dem RAN/BSS 15) ermittelten Ort umfasst beispielsweise, dass bei Besuchen des Nutzers der Mobilstation 13 in bestimmten Gruppen von Zellidentitäten etc. (welche dieser in irgendeiner Form vorher festgelegt hat) unterbleiben muss. Außerdem kann hierbei noch überprüft werden, ob zur aktuellen Uhrzeit an den Anfragenden 11 die Position mitgeteilt werden soll, wobei eine Übermittlung der Position an den Anfragenden beispielweise nur für innerhalb einer vorgegebenen Zeitspanne ermittelte Positionsdaten erfolgt.

## Patentansprüche

1. Verfahren zum Abfragen des Einverständnisses eines Nutzers eines Mobilfunkendgerätes (13) eines Mobilfunknetzes mit der Übermittlung (8b) seiner Positionsdaten an einen Anfragenden (11),
wobei im Falle einer Anfrage (1) eines Anfragenden (11) nach der Position (15) des Mobilfunkendgerätes (13) vor einer Weiterleitung (2c) von Anfragedaten aus der Anfrage (1) an eine Vermittlungsstelle (14) des Mobilfunknetzes (14, 16, 12) die Anfragedaten um eine für diesen Anfragenden (11) vorgegebene Angabe (20 oder 21 oder 22 oder 23) ergänzt werden, aufgrund welcher (20 - 23) zumindest bestimmbar ist (14), ob ein Einverständnis seitens des Mobilfunkendgerätes (13) zur Weitergabe (8b) der Mobilfunk-Endgerät-Position an den Anfragenden (11) einzuholen (3,4) ist,
wobei zumindest dann, wenn die Angabe (20 bis 23) aussagt, dass das Einverständnis einzuholen ist (22, 23), eine Anforderung (3) zur Erklärung des Einverständnisses von der Vermittlungsstelle (14) an das Mobilfunkendgerät (13) gesandt wird (3),
wobei vor einer Übersendung (8b) der Position des Endgerätes (13) an den Anfragenden (11) anhand von vorgegebenen, gespeicherten (16; 18) Bedingungen geprüft wird, ob diese Position an diesen Anfragenden (11) gesandt (8b) werden soll.

2. Verfahren nach Anspruch 1,
**dadurch gekennzeichnet,**
**dass** in den mit der Anfrage (1) übermittelten Anfragedaten vor deren Weiterleitung an eine Vermittlungsstelle die Identität (Client ID 1) des Anfragenden betreffende Identitätsdaten durch eine genannte Angabe (20/21/22/23) ersetzt werden und dass die Angabe (20/21/22/23) anstatt Identitätsdaten an die Vermittlungsstelle (14) gesandt (2c) wird.

3. Verfahren nach einem der vorhergehenden Ansprüche
**dadurch gekennzeichnet,**
**dass** an die Vermittlungsstelle (14) auch die Identität des Anfragenden (11) betreffende Identitätsdaten in einem Zusatz mit übersandt werden.

4. Verfahren nach Anspruch 3
**dadurch gekennzeichnet,**
**dass** die Identitätsdaten in einer Anforderung (3) zur Einverständniserklärung an das Mobilfunkendgerät (13) mit übersandt werden.

5. Verfahren nach einem der vorhergehenden Ansprüche
**dadurch gekennzeichnet,**
**dass** an die Vermittlungsstelle (14) auch den Anfragenden (11) betreffende Namensdaten (Client Name) gesandt werden.

6. Verfahren nach Anspruch 5
**dadurch gekennzeichnet,**
**dass** die Namensdaten von der Vermittlungsstelle (14) an das Mobilfunkendgerät (13) in der Anforderung (3) übersandt werden.

7. Verfahren nach einem der vorhergehenden Ansprüche
**dadurch gekennzeichnet,**
**dass** an die Vermittlungsstelle (14) die Identität (IMSI, MSISDN) des Mobilfunkteilnehmeridentitätsmoduls betreffende, in der Anfrage (1) enthaltende Mobilfunkteilnehmeridentitätsdaten übersandt werden (2c).

8. Verfahren nach einem der vorhergehenden Ansprüche
**dadurch gekennzeichnet,**
**dass** die Anfrage (1) bei einer Positionsdatenanfrageannahmenstelle (GMLC 12) des Mobilfunknetzes eintrifft.

9. Verfahren nach einem der vorhergehenden Ansprüche
**dadurch gekennzeichnet,**
**dass** die Vermittlungsstelle (14) eine MSC oder SGSN ist.

10. Verfahren nach einem der vorhergehenden Ansprüche
**dadurch gekennzeichnet,**
**dass** die Vermittlungsstelle (14) die Position des Mobilfunkendgerätes (13) von einem BSS oder RAN des Mobilfunknetzes erfragt.

11. Verfahren nach einem der vorhergehenden Ansprüche
**dadurch gekennzeichnet,**
**dass** die Angabe (20 bis 23) nur eine vorgegebene Anzahl verschiedener Anweisungen enthalten kann, insbesondere die Anweisungen: Positionsdaten übermitteln ohne Mitteilung, Positionsdaten übermitteln mit Mitteilung, Positionsdaten übermitteln nur nach Einverständnis der Mobilstation oder bei Ausbleiben einer Antwort der Mobilstation, Positionsdaten nur bei Einverständnis der Mobilstation übermitteln.

12. Verfahren nach einem der vorhergehenden Ansprüche
**dadurch gekennzeichnet,**
**dass** für eine Vielzahl von Mobilfunkteilnehmeridentitätsmodulen (13) und/oder Mobilstationen (13) die gleichen Angaben gespeichert (16, 18) sind und/oder dass nur die gleiche begrenzte Anzahl von verschiedenen Angaben (20 bis 23) gespeichert ist.

13. Verfahren nach einem der vorhergehenden Ansprüche
**dadurch gekennzeichnet,**
**dass** von der Vermittlungsstelle (14) bei einem Heimatregister (16) bei Eintreffen einer Anfrage (2c) bei der Vermittlungsstelle (14) die Angaben (20 bis 23) für diese Mobilstation abgefragt werden.

14. Verfahren nach einem der vorhergehenden Ansprüche
**dadurch gekennzeichnet,**
**dass** die die Anfrage (1) vom Anfragenden (11) bekommende Positionsdatenanfragenannahmenstelle (GMLC 12) vor der Weiterleitung (2c) von Anfragedaten an eine Vermittlungsstelle (14) die Identitätsdaten betreffend den Anfragenden zusammen mit der unter Berücksichtung des Anfragenden (11) von der Mobilstation (13) ausgewählten Angabe (20 bis 23) abspeichert und nach Eintreffen (7) von Positionsdaten diese unter gespeicherten (18) Bedingungen an den Anfragenden (11) auf welchen die zur Angabe gespeicherten Identitätsdaten (17) zutreffen, weiterleitet (8b).

15. Verfahren nach einem der vorhergehenden Ansprüche
**dadurch gekennzeichnet,**
**dass** in einer Positionsdatenanfrageannahmenstelle (GMLC 12) für mehrere Mobilfunkteilnehmeridentitäten jeweils gespeichert ist, für welche potentiellen Anfragenden 11 die Anfragedaten der Anfrage (1) vor Weiterleitung (2c) an eine Vermittlungsstelle (14) durch welche Angabe (20 bis 23) aus einem Speicher (18) zu ergänzen sind.

16. Verfahren nach einem der vorhergehenden Ansprüche
**dadurch gekennzeichnet,**
**dass** in einer Positionsdatenanfrageannahmestelle (GMLC 12) für mehrere Mobilfunkteilnehmeridentitäten (13) eine Weiterleitung (7) von Positionsdaten an einen Anfragenden (11) nur erfolgt, falls dies für diese Position laut gespeicherten (18) von der Positionsdatenanfrageannahmestelle (12) aus dem Speicher (18) abgefragten Bedingungen von diesem Mobilfunkteilnehmeridentitätsmodul oder Mobilfunkendgerät zugelassen ist.

17. Verfahren nach einem der vorhergehenden Ansprüche
**dadurch gekennzeichnet,**
**dass** eine Positionsdatenübermittlung (8b) an einen Anfragenden (11) nur erfolgt, falls dies für die Zeit der Erfassung der Position gemäß gespeicherten (18) Bedingungen für den Nutzer der Mobilstation (13) bzw. deren Mobilfunkteilnehmeridentitätskarte zugelassen ist.

18. Verfahren nach einem der vorhergehenden Ansprüche
**dadurch gekennzeichnet,**
**dass** die Bedingungen vom Nutzer über sein Mobilfunkendgerät oder ein anderes Endgerät per Mobilfunk, WAP, Internet, Festnetz oder anderweitig änderbar sind.

19. Verfahren nach einem der vorhergehenden Ansprüche
**dadurch gekennzeichnet,**
**dass** die Vermittlungsstelle (14) die vom Mobilfunkendgerät (13) gerade benutzte Mobilfunk-Vermittlungsstelle ist.

20. Mobilfunknetz, insbesondere zur Durchführung des Verfahrens nach einem der vorhergehenden Ansprüche,
- mit einer Positionsdatenanfragenannahmestelle (GMLC 12), die so ausgebildet ist, dass sie Positionsdaten auf Anfragen (1) eines Anfragenden (11) nach Positionsdaten einer Mobilstation (13) an den Anfragenden (11) nur beim Zutreffen von für diese Mobilstation (13) vorgegebenen, in einem Speicher (18) gespeicherten Bedingungen übermittelt (8b) und die (12) Zugriff auf einen Speicher (18) hat, in welchem gespeichert ist, für welche Anfragenden (11) für eine bestimmte Mobilstation (13) vor einer Weiterleitung der Anfrage (1) des Anfragenden (11) an eine Vermittlungsstelle (14) die Identität des Anfragenden (11) durch welche Angabe (20 bis 23) zu ersetzen ist,
- mit einer Vermittlungsstelle, die so ausgebildet ist, dass sie bei Anfragen (2c) nach Positionen eines Mobilfunkendgerätes (13) gemäß der ihr übermittelten (2c) Identität (20 bis 23) des Anfragenden (11) für eine Mobilstation (13) diese (13) vor der Positionsdatenübermittlung (7) um Einverständnis fragt (3),
- mit einem Heimatregister (16) mit einem Speicher in welchem zu mehreren Identitäten (20 bis 23) von Anfragenden (11) Anweisungen für Vermittlungsstellen (14) dahingehend gespeichert sind, ob vor einer Positionsdatenübermittlung (7, 8b) an den Anfragenden (11) das Einverständnis der Mobilstation (13) anzufragen (3) ist, wobei die in einem oder mehreren Heimatregistern (16) gespeicherten Anweisungen (20 bis 23) für Identitäten (20 bis 23) von Anfragenden (11) für mehrere Mobilfunkteilnehmeridentitätsmodule oder Mobilfunkendgeräte (13) gleich sein können.

## Claims

1. Method for polling the concordance of a user of a mobile radio terminal (13) of a mobile radio network with the transmission (8b) of his positional data to a poller (11),
wherein, in the case of an enquiry (1) of a poller (11) relating to the position (15) of the mobile radio terminal (13), prior to a forwarding (2c) of polling data from the enquiry (1) to an exchange (14) of the mobile radio network (14, 16, 12), the polling data is supplemented by a specification (20 or 21 or 22 or 23) stipulated for said poller (11), on the basis of which (20-23) it can be determined (14) at least whether the consent of the mobile radio terminal (13) must be obtained (3, 4) for forwarding (8b) the mobile radio terminal position to the poller (11),
wherein, at least in the case where the specification (20 to 23) stipulates that consent must be obtained (22, 23), a request (3) for declaring the consent is sent (3) by the exchange (14) to the mobile radio terminal (13),
wherein, prior to a transmission (8b) of the position of the terminal (13) to the poller (11), it is checked on the basis of predetermined stored (16; 18) conditions whether said position is to be sent (8b) to said poller (11).

2. Method according to claim 1, **characterised in that**, prior to its forwarding to an exchange, a named specification (20/21/22/23) is substituted in the polling data transmitted with the enquiry (1) for the identity (client ID1) of the identity data relating to the poller, and **in that** the specification (20/21/22/23) is sent (2c) to the exchange (14) instead of identity data.

3. Method according to one of the preceding claims, **characterised in that** identity data relating to the identity of the poller (11) is also transmitted to the exchange (14) in a supplement.

4. Method according to claim 3, **characterised in that** the identity data is also transmitted to the mobile radio terminal (13) in a request (3) for a consent declaration.

5. Method according to one of the preceding claims, **characterised in that** the name data (client name) relating to the poller (11) is also sent to the exchange (14).

6. Method according to claim 5, **characterized in that** the name data is transmitted from the exchange (14) to the mobile radio terminal (13) in the request (3).

7. Method according to one of the preceding claims, **characterised in that** mobile radio subscriber identity data relating to the identity (IMSI, MSISDN) of the mobile radio subscriber identity module and contained in the enquiry (1) is transmitted (2c) to the exchange (14).

8. Method according to one of the preceding claims, **characterised in that** the enquiry (1) arrives at a positional data request gateway (GMLC 12) of the mobile radio network.

9. Method according to one of the preceding claims, **characterised in that** the exchange (14) is an MSC or SGSN.

10. Method according to one of the preceding claims, **characterised in that** the exchange (14) enquires about the position of the mobile radio terminal (13) from a BSS or RAN of the mobile radio network.

11. Method according to one of the preceding claims,
**characterised in that** the specification (20 to 23) can contain only a predetermined number of different instructions, in particular the instructions: transmit positional data without notification, transmit positional data with notification, transmit positional data only after obtaining consent from the mobile station or, if no response is received from the mobile station, transmit positional data only if the mobile station has consented.

12. Method according to one of the preceding claims, **characterised in that** the same specifications (16, 18) are stored for a multiplicity of mobile radio subscriber identity modules (13) and/or mobile stations (13), and/or **in that** only the same limited number of different specifications (20 to 23) is stored.

13. Method according to one of the preceding claims, **characterised in that** on arrival of an enquiry (2c) at the exchange (14), the specifications (20 to 23) for said mobile station are requested by the exchange (14) from a home location register (16).

14. Method according to one of the preceding claims, **characterised in that**, prior to the forwarding (2c) of polling data to an exchange (14), the positional data request gateway (GMLC 12) receiving the enquiry (1) from the poller (11) stores the identity data relating to the poller together with the specification (20 to 23) selected by the mobile station (13) taking the poller (11) into account, and following the arrival (7) of positional data forwards (8b) said data according to stored (18) conditions to the poller (11) to whom the identity data (17) stored for the specification relates.

15. Method according to one of the preceding claims,
**characterised in that** for a plurality of mobile radio subscriber identities it is stored in each case in a positional data request gateway (GMLC 12) for which potential pollers 11 the polling data of the enquiry (1) is to be supplemented by which specification (20 to 23) from a memory (18) prior to forwarding (2c) to an exchange (14).

16. Method according to one of the preceding claims, **characterised in that** for a plurality of mobile radio subscriber identities (13), in a positional data request gateway (GMLC 12) positional data is only forwarded (7) to a poller (11) if the latter is permitted by said mobile radio subscriber identity module or mobile radio terminal for this position according to stored (18) conditions requested by the positional data request gateway (12) from the memory (18).

17. Method according to one of the preceding claims, **characterised in that** positional data is only transmitted (8b) to a poller (11) if this is permitted for the time of the recording of the position according to the stored (18) conditions for the user of the mobile station (13) or his mobile radio subscriber identity card respectively.

18. Method according to one of the preceding claims, **characterised in that** the user can make changes to the conditions using his mobile radio terminal or another terminal by means of mobile radio, WAP, Internet, fixed network or other means.

19. Method according to one of the preceding claims, **characterised in that** the exchange (14) is the mobile radio exchange currently being used by the mobile radio terminal (13).

20. Mobile radio network, in particular for carrying out the method as claimed in one of the preceding claims,
- having a positional data request gateway (GMLC 12) which is designed in such a way that, following enquiries (1) of a poller (11) for positional data of a mobile station (13), it transmits (8b) positional data to the poller (11) only if conditions specified for said mobile station (13) and stored in a memory (18) are met, and which (12) has access to a memory (18) in which it is stored for which pollers (11) for a particular mobile station (13) the identity of the poller (11) is to be replaced by which specification (20 to 23) prior to a forwarding of the enquiry (1) of the poller (11) to an exchange (14),
- having an exchange which is designed in such a way that in the case of enquiries (2c) for positions of a mobile radio terminal (13) it asks (3) the mobile station (13) for consent before transmitting (7) positional data in accordance with the identity (20 to 23) of the poller (11) transmitted (2c) to it for a mobile station (13),
- having a home location register (16) with a memory in which instructions for exchanges (14) are stored for a plurality of identities (20 to 23) of pollers (11) with respect to whether the consent of the mobile station (13) must be requested (3) prior to the transmission (7, 8b) of positional data to the poller (11), wherein the instructions (20 to 23) stored in one or more home location registers (16) may be the same for identities (20 to 23) of pollers (11) for a plurality of mobile subscriber identity modules or mobile radio terminals (13).

## Revendications

1. Procédé de demande d'accord d'un utilisateur d'un terminal de radiocommunication mobile (13) d'un réseau de radiocommunication mobile, avec la transmission (8b) de ses données de position à un demandeur (11),
dans lequel, dans le cas d'une demande (1) d'un demandeur (11) demandant la position (15) du terminal de radiocommunication mobile (13), avant un acheminement (2c) à un centre de commutation (14) du réseau de radiocommunication mobile (14, 16, 12) de données de demande provenant de la demande (1), les données de demande sont complétées par une indication (20 ou 21 ou 22 ou 23) prédéfinie pour ce demandeur (11), en raison de laquelle (20 - 23) il est au moins déterminable (14) si un accord doit être demandé (3, 4), du côté du terminal de radiocommunication mobile (13), pour le transfert (8b) de la position du terminal de radiocommunication mobile au demandeur (11),
dans lequel, au moins lorsque l'indication (20 à 23) indique que l'accord doit être demandé (22, 23), une demande (3) de donnée de l'accord est émise (3) par le centre de commutation (14) au terminal de radiocommunication mobile (13),
dans lequel, avant une émission (8b) au demandeur (11) de la position du terminal (13), il est vérifié à l'aide de conditions prédéfinies, mémorisées (16 ; 18), si cette position doit être émise (8b) à ce demandeur (11).

2. Procédé selon la revendication 1,
**caractérisé**
**en ce que** dans les données de demande transmises avec la demande (1), avant leur acheminement à un centre de commutation, les données d'identité concernant l'identité (Client ID 1) du demandeur sont remplacées par une dite indication (20/21/22/23) et en ce que l'indication (20/21/22/23) est émise (2c) au centre de commutation (14) au lieu des données d'identification.

3. Procédé selon l'une quelconque des revendications précédentes,
**caractérisé**
**en ce que** les données d'identité concernant l'identité du demandeur (11) sont également émises au centre de communication (14) dans un supplément.

4. Procédé selon la revendication 3,
**caractérisé**
**en ce que** les données d'identité sont également émises au terminal de radiocommunication mobile (13) dans une demande (3) de donnée d'accord.

5. Procédé selon l'une quelconque des revendications précédentes,
**caractérisé**
**en ce que** des données de nom (Client Name) concernant le demandeur (11) sont également émises au centre de commutation (14).

6. Procédé selon la revendication 5,
**caractérisé**
**en ce que** les données de nom sont transmises dans la demande (3) par le centre de commutation (14) au terminal de radiocommunication mobile (13).

7. Procédé selon l'une quelconque des revendications précédentes,
**caractérisé**
**en ce que** les données d'identité de l'abonné de radiocommunication mobile concernant l'identité (IMSI, MSISDN) du module d'identité de l'abonné de radiocommunication mobile sont émises (2c) au centre de commutation (14) dans la demande (1).

8. Procédé selon l'une quelconque des revendications précédentes,
**caractérisé**
**en ce que** la demande (1) arrive dans un centre d'acceptation de demandes de données de position (GMLC 12) du réseau de radiocommunication mobile.

9. Procédé selon l'une quelconque des revendications précédentes,
**caractérisé**
**en ce que** le centre de commutation (14) est un MSC ou SGSN.

10. Procédé selon l'une quelconque des revendications précédentes,
**caractérisé**
**en ce que** le centre de commutation (14) demande la position du terminal de radiocommunication mobile (13) auprès d'un BSS ou RAN du réseau de radiocommunication mobile.

11. Procédé selon l'une quelconque des revendications précédentes,
**caractérisé**
**en ce que** l'indication (20 à 23) ne peut contenir qu'un nombre prédéfini d'instructions différentes, notamment les instructions : transmettre les données de position sans message, transmettre les données de position avec message, transmettre les données de position seulement après l'accord de la station mobile ou en cas de non-réponse de la station mobile, transmettre les données de position seulement en cas d'accord de la station mobile.

12. Procédé selon l'une quelconque des revendications précédentes,
**caractérisé**
**en ce que** les mêmes indications sont mémorisées (16, 18) pour une pluralité de modules d'identité d'abonné de radiocommunication mobile (13) et/ou de stations mobiles (13) et/ou en ce que seulement le même nombre limité d'indications différentes (20 à 23) est mémorisé.

13. Procédé selon l'une quelconque des revendications précédentes,
**caractérisé**
**en ce que** les indications (20 à 23) sont demandées pour cette station mobile par le centre de commutation (14) dans un enregistreur de localisation nominal (16) lors de l'arrivée d'une demande (2c) au centre de commutation (14).

14. Procédé selon l'une quelconque des revendications précédentes,
**caractérisé**
**en ce que** le centre d'acceptation de demandes de données de position (GMLC 12) recevant la demande (1) du demandeur (11) mémorise, avant l'acheminement (2c) de données de demande à un centre de commutation (14), les données d'identité concernant le demandeur (11) en même temps que l'indication (20 à 23) sélectionnée par la station mobile (13) en tenant compte du demandeur, et, après l'arrivée (7) de données de position, achemine celles-ci (8b), dans des conditions mémorisées (18), au demandeur (11) auquel les données d'identité (17) mémorisées pour l'indication correspondent.

15. Procédé selon l'une quelconque des revendications précédentes,
**caractérisé**
**en ce que** dans un centre d'acceptation de demandes de données de position (GMLC 12), il est respectivement mémorisé, pour plusieurs identités d'abonné de radiocommunication mobile, pour quels demandeurs potentiels (11) les données de demande de la demande (1), avant l'acheminement (2c) à un centre de commutation (14), doivent être complétées par quelle indication (20 à 23) provenant d'une mémoire (18).

16. Procédé selon l'une quelconque des revendications précédentes,
**caractérisé**
**en ce que** dans un centre d'acceptation de demandes de données de position (GMLC 12), un acheminement (7) de données de position à un demandeur (11) est réalisé pour plusieurs identités d'abonné de radiocommunication mobile (13) seulement au cas où ceci est autorisé par ce module d'identité d'abonné de radiocommunication mobile ou terminal de radiocommunication mobile pour cette position conformément aux conditions mémorisées et demandées par le centre d'acceptation de demandes de données de position à partir de la mémoire.

17. Procédé selon l'une quelconque des revendications précédentes,
**caractérisé**
**en ce qu'**une transmission de données de position (8b) à un demandeur (11) est réalisée seulement au cas où ceci est autorisé pour l'utilisateur de la station mobile (13) resp. pour la carte d'identité de l'abonné de radiocommunication mobile de cette station mobile, pour le temps de détection de la position selon les conditions mémorisées (18).

18. Procédé selon l'une quelconque des revendications précédentes,
**caractérisé**
**en ce que** les conditions sont modifiables par l'utilisateur par l'intermédiaire de son terminal de radiocommunication mobile ou d'un autre terminal, via radiocommunication mobile, WAP, Internet, le réseau fixe ou d'une autre façon.

19. Procédé selon l'une quelconque des revendications précédentes,
**caractérisé**
**en ce que** le centre de commutation (14) est le centre de commutation de radiocommunication mobile momentanément utilisé par le terminal de radiocommunication mobile (13).

20. Réseau de radiocommunication mobile, notamment pour la réalisation du procédé selon l'une quelconque des revendications précédentes,
- comprenant un centre d'acceptation de demandes de données de position (GMLC 12) qui est exécuté de telle manière qu'il transmet à un demandeur (11) les données de position sur demandes (1) du demandeur (11) demandant des données de position d'une station mobile (13), seulement lors de l'arrivée de conditions prédéfinies pour cette station mobile (13), mémorisées dans une mémoire (18), et qui a accès à une mémoire (18), dans laquelle il est mémorisé pour quels demandeurs (11) l'identité du demandeur (11) doit être remplacée par quelle indication (20 à 23) pour une station mobile déterminée (13), avant un acheminement de la demande (1) du demandeur (11) à un centre de commutation (14),
- comprenant un centre de commutation qui est exécuté de telle manière qu'en cas de demandes (2c) de positions d'un terminal de radiocommunication mobile (13) selon l'identité (20 à 23) du demandeur (11), qui lui a été transmise (2c) pour une station mobile (13), il demande (3) à celle-ci (13) un accord avant de déterminer les données de position (7),
- comprenant un enregistreur de localisation nominal (16) doté d'une mémoire dans laquelle des instructions sont mémorisées pour plusieurs identités (20 à 23) de demandeurs (11), pour les centres de commutation (14) pour constater si avant une transmission des données de position (7, 8b) au demandeur (11), l'accord de la station mobile (13) doit être demandé (3), les instructions (20 à 23) mémorisées dans un ou plusieurs enregistreurs de localisation nominaux (16) pouvant être identiques pour les identités (20 à 23) de demandeurs (11) pour plusieurs modules d'identité d'abonné de radiocommunication mobile ou terminaux de radiocommunication mobile (13).
